# EUROPÄISCHE PATENTSCHRIFT

(11) **EP 0 800 645 B1**
(45) Veröffentlichungstag und Bekanntmachung des Hinweises auf die Patenterteilung: **22.08.2001**
(21) Anmeldenummer: 95942668.5
(22) Anmeldetag: 14.12.1995
(51) Int. Cl.: G01L 3/24

(54) **VERFAHREN UND VORRICHTUNG ZUR BESTIMMUNG EINER LEISTUNG**
PROCESS AND DEVICE FOR DETERMINING A POWER OUTPUT
PROCEDE ET DISPOSITIF PERMETTANT DE DETERMINER UNE PUISSANCE

(30) Priorität: 27.12.1994 EP 94120664
(43) Veröffentlichungstag der Anmeldung: 15.10.1997
(73) Patentinhaber: SIEMENS AKTIENGESELLSCHAFT, 80333 München (DE)
(72) Erfinder: GLOGER, Meinrad, D-45481 Mülheim (DE)
(86) Internationale Anmeldenummer: EP9504959
(87) Internationale Veröffentlichungsnummer: WO9620395

(56) Entgegenhaltungen:
- EP-A- 0 115 291
- EP-A- 0 412 780
- EP-A- 0 609 726
- GB-A- 2 262 345
- PATENT ABSTRACTS OF JAPAN vol. 11 no. 35 (P-542) [2482] ,3.Februar 1987 & JP,A,61 205830 (KAWASAKI HEAVY IND LTD) 12.September 1986, in der Anmeldung erwähnt
- PATENT ABSTRACTS OF JAPAN vol. 14 no. 179 (P-1034) ,10.April 1990 & JP,A,02 028527 (NIPPON HIHAKEI KEISOKU KENKYUSHO U.A.) 30.Januar 1990,

## Beschreibung

Die Erfindung betrifft ein Verfahren und eine Vorrichtung zur Bestimmung einer Leistung, mit welcher mechanische Energie zwischen einer feststehenden Maschine und einem diese entlang einer gerichteten Achse durchquerenden, mit einer Winkelgeschwindigkeit um die Achse rotierenden Wellenstrang ausgetauscht wird, wobei die Energie in dem Wellenstrang in Richtung der Achse strömt.

Die Erfindung bezieht sich dabei gleichermaßen auf die Bestimmung einer Leistung, die von einer Maschine an einen Wellenstrang abgegeben wird und auf die Bestimmung einer Leistung, die eine Maschine aus einem Wellenstrang aufnimmt.

Verfahren und Vorrichtung zur Bestimmung einer Leistung, mit der mechanische Energie zwischen einer feststehenden Maschine und einem rotierenden Wellenstrang ausgetauscht wird, sind in vielfältigen Formen im Stand der Technik bekannt. Insbesondere bekannt ist eine entsprechend anwendbare Vorrichtung, bei der die Bestimmung der Leistung zurückgeführt wird auf ein Drehmoment, welches in einem in den Wellenstrang eingefügten und diesen tordierenden Probekörper wirksam wird. Dieser Probekörper kann zum Beispiel ein entsprechend verjüngtes und mit geeigneten Sensoren versehenes Stück des Wellenstranges sein.

Zum Stand der Technik wird verwiesen auf die EP 0 609 726 A2, die GB 2 262 345 A, die EP 0 412 780 A2, korrespondierend zu dem US-Patent 5,215,145, sowie einen Kurzauszug aus "Patent Abstracts of Japan", Band 11, Nr. 35 (P-542) [2482]. Jedes dieser Dokumente betrifft ein Meßverfahren und eine Meßeinrichtung zur Bestimmung einer Leistung, mit welcher mechanische Energie eine rotierende Welle durchströmt. Die Einrichtung umfaßt jeweils eine Mehrzahl von auf der Welle angebrachten Wellenmarken, eine Mehrzahl von feststehenden, jeweils einer Wellenmarke zugeordneten Sensoren sowie Mittel zur Auswertung von Signalen, die von den Sensoren abgegeben werden und aus denen die Leistung berechnet wird. In jedem Fall ist die Welle zwischen den Wellenmarken einfach und strukturlos gestaltet, d.h. sie ist zylindrisch. Auch sind die Wellenmarken in nur geringem Abstand voneinander angeordnet. Diese Konfiguration erlaubt es, die bei einer gegebenen Leistung auftretende Torsion der Welle theoretisch vorherzusagen und unter Benutzung solcher Vorhersagen die Leistung unmittelbar und absolut messen zu können. Diese Vorteile nehmen der Einrichtung im Hinblick auf Weiterbildungen die Flexibilität. Im übrigen muß jede bekannte Einrichtung und jedes bekannte Verfahren auskommen mit einer vergleichsweise geringen Torsion der rotierenden Welle, was zu einer erheblichen Beeinträchtigung der Genauigkeit der vorzunehmenden Messung führen kann.

Als Anwendungsgebiet für die Erfindung wird insbesondere die Überwachung eines aus mehreren Maschinen bestehenden Maschinensatzes in Betracht gezogen, wobei die Maschinen des Maschinensatzes entlang eines gemeinsamen, rotierenden Wellenstrangs hintereinander angeordnet sind. Als solcher Maschinensatz kommt beispielsweise ein einwelliger Turbosatz, umfassend in der Regel mehrere Dampfturbinen, unter Umständen eine Gasturbine, sowie einen Generator in Betracht. Im Hinblick auf diese Anwendung sei nochmals verwiesen auf die EP 0 609 726 A2. In einem solchen Maschinensatz ist es vielfach wichtig, die Verteilung von Bereitstellung und Entzug mechanischer Energie auf die einzelnen Maschinen sorgfältig abzustimmen, um die Maschinen gleichmäßig auszulasten und Überbeanspruchungen zu vermeiden. Eine Überbeanspruchung kann dabei sowohl in einer übermäßigen Auslastung als auch in einem ungeplanten Leerlauf bestehen; das letzte Kriterium gilt insbesondere für eine Dampfturbine, die bei unzureichender Beaufschlagung mit Dampf nicht mehr als Turbine, sondern als Kompressor arbeitet und sich dadurch extremen Temperaturbelastungen aussetzen kann.

Dementsprechend geht die Erfindung aus von der Aufgabe, ein Verfahren sowie eine Vorrichtung zur Bestimmung einer Leistung, mit welcher mechanische Energie zwischen einer feststehenden Maschine und einem diese entlang einer gerichteten Achse durchquerenden, um die Achse rotierenden Wellenstrang ausgetauscht wird, anzugeben, wobei sich Verfahren und Vorrichtung durch Einfachheit und Betriebssicherheit auszeichnen sowie, in entsprechender Ausgestaltung, zur Überwachung eines größeren Maschinensatzes eignen sollen.

Im Hinblick auf ein Verfahren wird zur Lösung der Aufgabe erfindungsgemäß ein Verfahren zur Bestimmung einer Leistung, mit welcher mechanische Energie zwischen einer Maschine von zumindest zwei feststehenden Maschinen und einem diese entlang einer gerichteten Achse durchquerenden, mit einer Winkelgeschwindigkeit um die Achse rotierenden Wellenstrang ausgetauscht wird, wobei die Energie in dem Wellenstrang in Richtung der Achse strömt, angegeben, bei dem ein Winkel bestimmt wird, um den der Wellenstrang in der einen Maschine tordiert ist, und aus dem Produkt des Winkels und eines vorgegebenen Eichkoeffizienten die Leistung ermittelt wird.

Ein wichtiges Merkmal der Erfindung liegt schon darin, daß von der Verwendung bekannter Leistungsmeßeinrichtungen abgesehen und auf ohnehin vorhandene und für den angegebenen Zweck nicht notwendigerweise zu modifizierende Komponenten der Maschine bzw. des Maschinensatzes zurückgegriffen wird. Erfindungsgemäß wird demnach unmittelbar die Torsion des Wellenstranges, die sich durch eine aufgrund des Austauschs der mechanischen Energie im Inneren der Maschine ergebende und in Einzelheiten nicht näher zu erörternde Beanspruchung des Wellenstrangs einstellt. Die Erfindung macht vorteilhaften Gebrauch von der Tatsache, daß die vergleichsweise geringe Neigung eines üblichen Wellenstrangs, sich tordieren zu lassen, mehr als ausgeglichen wird von der notwendigen Lange des Wellenstrangs, um die Maschine durchqueren zu müssen.

Eine Bedingung für die Leistungsmessung ist, daß die mechanische Energie, deren Austausch gemessen werden soll, entlang einer bestimmten Richtung durch den Wellenstrang strömt, und sich nicht etwa auf Teilströme, die in einander entgegengesetzten Richtungen abfließen, aufteilt. Ist dies einmal der Fall, so kann erfindungsgemäß nur die Differenz zwischen den Teilströmen gemessen werden, die sicherlich auch eine gewisse Bedeutung für den Betrieb der Maschine hat und gegebenenfalls ergänzt werden kann um zusätzliche Messungen, die eine Aussage über die insgesamt ausgetauschte Energie gestatten; Hauptanwendungsgebiet der Erfindung ist allerdings eine Maschine, der entweder entlang einer definierten Richtung Energie zufließt oder von der Energie in einer definierten Richtung abfließt. In einem Turbosatz mit mehreren Turbinen und einem Generator, die alle auf einem einzigen Wellenstrang sitzen, ist solches immer der Fall, da alle Turbinen mechanische Energie in den Wellenstrang einführen und nur der Generator Energie aus dem Wellenstrang aufnimmt. Eine eindeutige Richtung, in welcher die Energie fließt, ist daher gegeben. In einer Maschine, in der derartiges nicht der Fall ist, verbleibt selbstverständlich stets die Möglichkeit der Aufstellung einer Energiebilanz, aus der für jede Maschine eine gültige Aussage hinsichtlich der zwischen ihr und dem Wellenstrang ausgetauschten Leistung gemacht werden kann.

Für eine Maschine, die sich am Ende eines Wellenstrangs befindet, so daß sich also ein aus dieser Maschine herausragendes Ende des Wellenstranges definitiv im Leerlauf befindet, ist bei gegebenem Drehsinn auch in Anwendung der Erfindung feststellbar, ob die Maschine von dem Wellenstrang Leistung aufnimmt oder an diesen Leistung abgibt. Es ist hierzu die Orientierung des durch die Torsion des Wellenstrangs gegebenen Pseudoskalars zu bestimmen und in Relation zu setzen zu der Orientierung des Pseudovektors, der durch den Drehsinn des Wellenstrangs gegeben ist. Hieraus ist eine Richtung zu bestimmen, und zwar diejenige Richtung, die die Orientierung des Pseudovektors zu dem vorliegenden Pseudoskalar ergänzt. Dementsprechend ist diese Richtung auf jeden Fall parallel zu der Achse, um die sich der Wellenstrang dreht. Weist diese Richtung auf das leerlaufende Ende des Wellenstrangs, so nimmt die Maschine aus dem Wellenstrang Energie auf, weist sie von dem leerlaufenden Ende weg, so gibt die Maschine Energie ab.

Der erfindungsgemäß in Betracht zu ziehende Eichkoeffizient ist eine mehr oder weniger komplexe Funktion der Torsionsmodule der Werkstoffe, aus denen der Wellenstrang im Inneren der Maschine besteht, der geometrischen Kenngrößen des Wellenstrangs sowie der Winkelgeschwindigkeit, mit der der Wellenstrang rotiert. Eine analytische Bestimmung des Eichkoeffizienten kann bei einem komplex aufgebauten und komplex gestalteten Wellenstrang, wie es beispielsweise in einer Turbine der Gleichdruckbauweise der Fall sein kann, zu großen Schwierigkeiten führen. Der Eichkoeffizient kann jedoch im Regelfall problemlos im Rahmen eines Probelaufes der Maschine und des Wellenstrangs bestimmt werden, vorzugsweise als Funktion der betrieblichen Parameter und für alle Betriebszustände, mit denen im regulären Betrieb zu rechnen ist. Spätere Messungen der Torsion des Wellenstrangs können dann als Relativmessungen durchgeführt werden, was ihrer Anwendbarkeit zur Überprüfung der einwandfreien Funktion der Maschine und des Wellenstrangs nicht entgegensteht.

Bevorzugtermaßen erfolgt die erfindungsgemäße Bestimmung der Leistung, indem zu einem Bezugszeitpunkt Winkelpositionen zweier Wellenmarken, welche auf dem Wellenstrang jeweils neben der Maschine positioniert sind und die Maschine zwischen sich einschließen, bestimmt und der Winkel als Differenz dieser Winkelpositionen ermittelt wird. Die Messung der Winkelpositionen kann mit einfachen Mitteln, beispielsweise stroboskopisch, erfolgen; sie erfordert einen nur geringen und keinesfalls komplizierten Aufwand.

Mit weiterem Vorzug wird die Bestimmung der Leistung zyklisch wiederholt und liefert somit eine wichtige Aussage zur Beurteilung, ob die Maschine und der Wellenstrang einwandfrei funktionieren.

Darüber hinaus bevorzugt erfolgt die Bestimmung des Winkels dadurch, daß im wesentlichen kontinuierlich eine zeitliche Ableitung des Winkels bestimmt und der Winkel durch zeitliche Integration der Ableitung ermittelt wird. Soll der Winkel wie erwähnt aus Winkelpositionen von Wellenmarken bestimmt werden, so erfolgt gleichermaßen bevorzugt im wesentlichen kontinuierlich die Bestimmung zeitlicher Ableitungen der Winkelpositionen und Ermittlung des Winkels durch eine Kombination aus Differenzbildung und zeitlicher Integration der zeitlichen Ableitungen der Winkelpositionen. Es ist eine untergeordnete Frage, ob zunächst Differenzen der zeitlichen Ableitungen gebildet werden und anschließend die zeitliche Integration erfolgt, oder ob die zeitlichen Ableitungen der Winkelpositionen zunächst je für sich integriert werden und anschließend die Differenz aus den Integralen gebildet wird.

Die Bestimmung der zeitlichen Ableitungen der Winkelpositionen erfolgt weiterhin vorzugsweise durch Messung einer durch die Rotation des Wellenstrangs gegebenen Umlaufzeit der entsprechenden Wellenmarke. Dabei wird ausgenutzt, daß sich die Umlaufzeit einer Wellenmarke verändert, wenn die Welle während des Umlaufes der Wellenmarke tordiert wird, so daß diese Veränderung ein Maß für die zeitliche Änderung der Torsion des Wellenstrangs und somit ein Maß für die zeitliche Ableitung der Winkelposition ist. Eine Winkelangabe ist aus der Umlaufzeit leicht durch Multiplikation mit der Winkelgeschwindigkeit des Wellenstrangs zu erhalten. Wird eine Messung dieser Art zyklisch wiederholt, so ergibt sich als Resultat eine zeitlich regelmäßige Folge von Umlaufzeiten, der die durch Torsion des Wellenstrangs bedingte zeitliche Variation der Winkelposition aufmoduliert ist.

Grundsätzlich und unabhängig von Einzelheiten der Bestimmung des Winkels ist es bevorzugt, den Winkel über eine Vielzahl von zeitlich aufeinanderfolgenden Ermittlungen zu mitteln und somit einen gewissen Ausgleich für Meßfehler zu schaffen. Dies ist insbesondere wichtig beim Einsatz des Verfahrens zur Überwachung der Verteilung von Bereitstellung und Entzug mechanischer Energie in einem Maschinensatz mit mehreren Maschinen, da eine derartige Überwachung üblicherweise über relativ große Zeiträume erfolgt und eine relativ grobe Unterteilung eines solchen Zeitraums, insbesondere in Takte von einigen Sekunden Länge, zur Gewährleistung einer quasikontinuierlichen Überwachung ausreichend ist.

Im Hinblick auf eine Vorrichtung wird die der Erfindung zugrundeliegende Aufgabe gelöst mit einer Vorrichtung zur Bestimmung einer Leistung, mit welcher mechanische Energie zwischen einer Maschine von zumindest zwei feststehenden Maschinen und einem diese entlang einer Achse durchquerenden, mit einer Winkelgeschwindigkeit um die Achse rotierbaren Wellenstrang ausgetauscht wird, wobei die Energie in dem Wellenstrang in Richtung der Achse strömt, welche sich auszeichnet durch neben der einen Maschine und diese einschließend positionierte Meßeinrichtungen zur Bestimmung eines Winkels, um den der Wellenstrang in der einen Maschine tordiert ist, sowie eine mit den Meßeinrichtungen kommunizierende Recheneinrichtung zur Ermittlung der Leistung als Produkt des Winkels und eines vorgegebenen Eichkoeffizienten.

Zur Erläuterung dieser Vorrichtung ist zunächst auf die Ausführungen zum erfindungsgemäßen Verfahren zu verweisen.

Die Meßeinrichtungen umfassen vorzugsweise auf dem Wellenstrang angebrachte Wellenmarken sowie neben dem Wellenstrang ortsfest angebrachte und mit den Wellenmarken kommunizierende Sensoren.

Für Wellenmarken und Sensoren kommt eine große Vielfalt von Ausführungen in Frage; es kommt lediglich darauf an, daß Wellenmarken und Sensoren so ausgelegt sind, daß mit dem Sensor zu gegebener Zeit eine Positionsbestimmung der Wellenmarke möglich ist oder daß der Sensor ein Signal abgibt, wenn er von der Wellenmarke passiert wird. Als Beispiel für den ersten Fall sei hingewiesen auf eine Anordnung mit einer Farbmarkierung als Wellenmarke und einem Stroboskop mit Kamera als Sensor; für die zweitgenannte Ausführung sei genannt eine Anordnung mit einem auf dem Wellenstrang angebrachten und mit diesem rotierenden Magneten und einer Induktionsspule als Sensor; alternativ kommt als Wellenmarke eine auf dem Wellenstrang vorgesehene Erhebung und als Sensor ein Näherungssensor in Betracht. Die Art und Weise der Kommunikation zwischen einem Sensor und einer Recheneinrichtung bedarf an dieser Stelle keiner eingehenden Erläuterung; sie hat sich den Anforderungen jedes Einzelfalls gemäß auszurichten.

Die Recheneinrichtung in der Vorrichtung ist vorzugsweise so eingerichtet, daß mit ihr während einer Rotation des Wellenstranges im Leerlauf, also ohne daß mechanische Energie ausgetauscht wird, Nullpositionen der Wellenmarken bestimmt werden können, und daß anschließend, wenn der Wellenstrang unter Austausch mechanischer Energie zwischen sich und der Maschine rotiert, die Winkelpositionen relativ zu den Nullpositionen bestimmt werden. Diese relativen Bestimmungen liefern unmittelbar Aussagen über Torsionen des Wellenstrangs und geben damit unmittelbar den Einfluß wieder, den die ausgetauschte mechanische Energie auf den Zustand des Wellenstrangs ausübt.

Ein bevorzugter Ort für eine Meßeinrichtung ist ein neben der Maschine angeordnetes Lagergehäuse, in dem der Wellenstrang in einem Lager gelagert ist. Diese Ausführung zeichnet sich aus durch einen besonders geringen apparativen Aufwand und ist somit besonders günstig.

Darüber hinaus bevorzugt ist die Recheneinrichtung eingerichtet zum Vergleich der ermittelten Leistung mit einem vorgegebenen Nennwert und zur Abgabe einer Meldung, falls die Leistung von dem Nennwert abweicht. Es versteht sich, daß der vorgegebene Nennwert ein Wert von mehreren sein kann, wobei jeder dieser Werte ein einem bestimmten Betriebszustand entsprechender Nennwert ist. Auf diese Weise ist eine Abweichung, die auf eine Fehlfunktion der Maschine hindeuten kann, besonders leicht nachweisbar.

Von besonderer Bedeutung ist der Einsatz der Vorrichtung an einer Maschine in Form einer Turbine, beispielsweise einer Gasturbine oder einer Dampfturbine, oder in Form eines Generators.

Von besonderer Bedeutung ist der Einsatz der Vorrichtung für eine Mehrzahl von Maschinen, die entlang dem Wellenstrang hintereinander angeordnet sind, bei der Meßeinrichtungen zur Bestimmung eines zugehörigen Winkels, um den der Wellenstrang tordiert ist, für jede Maschine vorgesehen sind und bei der die Recheneinrichtung eingerichtet ist zur Bestimmung der Leistung, mit der mechanische Energie ausgetauscht wird, für jeweils jede Maschine und den Wellenstrang. Eine solche Vorrichtung leistet wichtige Beiträge zur betrieblichen Überwachung eines Satzes von mehreren Maschinen, da sie sich besonders eignet zur Überwachung, wie Bereitstellung und Entzug mechanischer Leistung über den Maschinensatz verteilt sind. Unzuträgliche Belastungen einzelner Maschinen können mit einer solchen Vorrichtung einfach erkannt und durch Abgabe geeigneter Meldungen einer schnellen Behebung zugeführt werden.

Mit weiterem Vorzug ist die Vorrichtung derart ausgeführt, daß zwischen jeweils zwei Maschinen nur eine einzige Meßeinrichtung vorgesehen ist, die zur Bestimmung der Leistung beider Maschinen herangezogen wird.

Ausführungsbeispiele der Erfindung gehen aus der Zeichnung hervor. Die Zeichnung ist teilweise schematisiert und teilweise verzerrt ausgeführt, um gewisse Merkmale besonders herauszustellen. Im einzelnen zeigen:
- FIG 1: eine Maschine und einen Wellenstrang nebst einer Vorrichtung zur Bestimmung der Leistung, mit der Energie zwischen diesen ausgetauscht wird;
- FIG 2: einen Teil eines Wellenstrangs zur Erläuterung bestimmter Merkmale;
- FIG 3: einen Wellenstrang mit einer Vielzahl von Maschinen sowie einer Vorrichtung, welche für jede Maschine eine Aussage über die zwischen dieser und dem Wellenstrang ausgetauschte Energie ermöglicht.

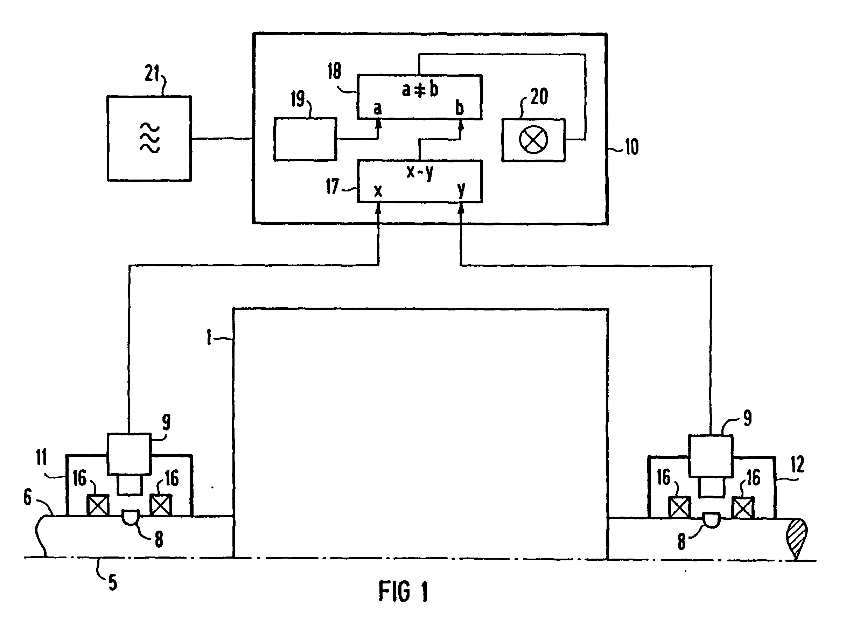

Figur 1 zeigt eine an dieser Stelle nicht näher zu spezifizierende Maschine 1, die entlang der Achse 5 von dem Wellenstrang 6 durchquert wird, wobei die Maschine 1 feststeht und der Wellenstrang 6 mit einer Winkelgeschwindigkeit um die Achse 5 rotiert, und wobei zwischen der Maschine 1 und dem Wellenstrang 6 Energie ausgetauscht wird.

Der Wellenstrang 6 ist gelagert in Lagern 16, die jeweils paarweise rechts und links neben der Maschine 1 angeordnet und von einem zugehörigen Lagergehäuse 11 oder 12 umgeben sind. Die Lagergehäuse 11 und 12 sind nur schematisch angedeutet.

Zur Bestimmung einer Leistung, mit der Energie zwischen der Maschine 1 und dem Wellenstrang 6 ausgetauscht wird, sind auf dem Wellenstrang 6 zwei Wellenmarken 8 angebracht, wobei jede Wellenmarke 8 in einem Lagergehäuse 11 oder 12 liegt und die Wellenmarken 8 die Maschine 1 zwischen sich einschließen. Jedes Lagergehäuse 11 oder 12 trägt darüber hinaus je einen feststehenden Sensor 9, welcher mit der entsprechenden Wellenmarke 8 kommuniziert und welcher eine spezifische Aussage zu einer Winkelposition der Wellenmarke 8 an eine Recheneinrichtung 10 geben kann.

Kommt es zum Austausch von Energie zwischen der Maschine 1 und dem Wellenstrang 6 im Inneren der Maschine 1, so wird der Wellenstrang 6 tordiert, was zu einer Versetzung der Wellenmarken 8 gegeneinander, bestimmt relativ zu einer Anordnung der Wellenmarken 8 bei Stillstand oder Leerlauf des Wellenstrangs 6, führt. Dies äußert sich im Auftreten einer spezifischen Differenz zwischen den Winkelpositionen der Wellenmarken 8, welche von den Sensoren 9 der Recheneinrichtung 10 gemeldet werden. Die Recheneinrichtung 10, von der nur die im vorliegenden Fall wichtigen Funktionsbausteine angedeutet sind, bestimmt in einem Subtrahierer 17 die Differenz der gemeldeten Winkelpositionen und vergleicht in einem Komparator 18 diese Differenz mit einem Nennwert, der entweder allein oder zusammen mit anderen Nennwerten entsprechend den möglichen Betriebszuständen des Wellenstrangs 6 und der Maschine 1 in einem Speicher 19 gespeichert ist, und gibt das Ergebnis dieses Vergleichs an einen Signalgeber 20, der eine Meldung abgibt, wenn es eine Abweichung zwischen der Differenz und dem Nennwert gibt. Die Recheneinrichtung 10 hat weiterhin einen Taktgeber 21, der benutzt werden kann sowohl zur Durchführung zyklisch wiederholter Messungen von Winkelpositionen als auch zur Messung von Umlaufzeiten der Wellenmarken, die sich ändern müssen, wenn sich aufgrund sich verändernder Betriebsbedingungen die Torsion des Wellenstrangs 6 zwischen den Wellenmarken 8 ändert. Auf Einzelheiten hinsichtlich der Ausgestaltung der Wellenmarken 8, der Sensoren 9, der Recheneinrichtung 10 sowie der Verbindungen zwischen diesen kommt es im vorliegenden Zusammenhang nur untergeordnet an; für Wellenmarken 8 und Sensoren 9 kommen vielzählige Typen in Frage, die Recheneinrichtung 10 kann insbesondere ein entsprechend programmierter Computer sein. Einschlägige Lehren gehen in großer Vielfalt aus dem Stand der Technik hervor, so daß an dieser Stelle weitere Erläuterungen entbehrlich sind.

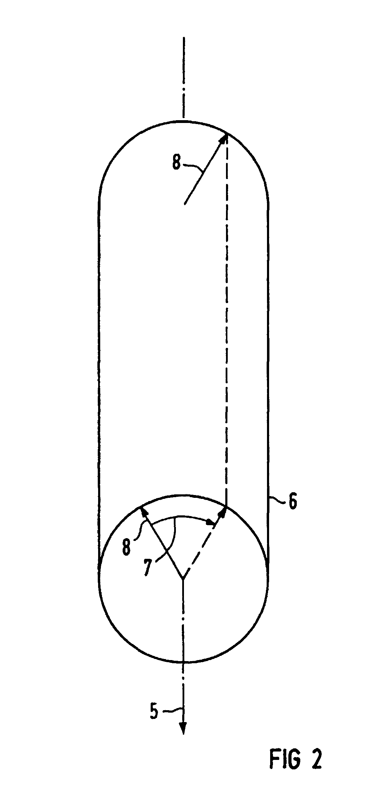

Was unter einer Torsion zu verstehen ist, geht am deutlichsten aus Figur 2 hervor. Gezeigt ist dort ein Stück eines Wellenstrangs 6, von dem angenommen sei, daß er entgegen dem Uhrzeigersinn um die gerichtete Achse 5 rotiert. Es sei angenommen, daß mechanische Energie entlang der durch die Achse 5 gegebenen Richtung durch den Wellenstrang 6 fließt. Zwischen den beiden Enden des dargestellten Stücks des Wellenstrangs 6, auf dem Wellenmarken 8 als radiale Pfeile eingetragen sind, fließe mechanische Energie aus dem Wellenstrang 6 in eine (nicht dargestellte) Maschine 1, 2, 3, 4. Dies führt dazu, daß sich die Welle 6 verdreht, was sich darin äußert, daß die vordere Wellenmarke 8 gegenüber ihrer (gestrichelt eingezeichneten) Ruheposition nach links verdreht wird. Zwischen der Ruheposition und der tatsächlichen Position liegt der Winkel 7, der ein Maß für den Austausch von Energie zwischen dem Wellenstrang 6 und der Maschine 1, 2, 3, 4, vorliegendenfalls für den Abfluß mechanischer Energie aus dem Wellenstrang 6, ist. Dieser Winkel 7 ist nämlich proportional einem Drehmoment, welches auf den Wellenstrang 6 ausgeübt wird und welches, multipliziert mit der Winkelgeschwindigkeit, mit der der Wellenstrang 6 rotiert, den Wert der Leistung, mit der die Energie ausgetauscht wird, ergibt. Die Messung des Winkels 7 kann grundsätzlich nach allen denkbaren Methoden erfolgen; bevorzugt, weil leicht realisierbar, ist es, die Winkelpositionen beider Wellenmarken 8 zu einem beliebigen, festgelegten Bezugspunkt zu messen und anschliessend den Winkel 7 als Differenz dieser Winkelpositionen zu bilden. Einzelheiten hierzu sind bereits erläutert worden, so daß an dieser Stelle weitere Ausführungen entbehrlich sind.

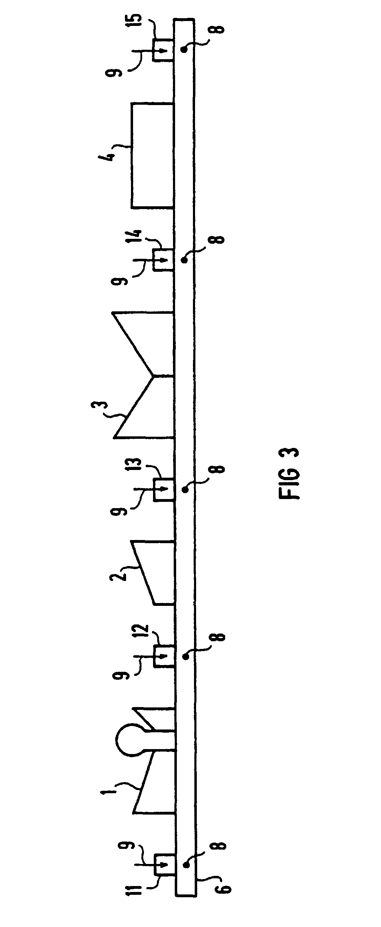

Figur 3 zeigt einen Maschinensatz mit einer Gasturbine 1, einer Hochdruck-Dampfturbine 2, einer Niederdruck-Dampfturbine 3 und einem Generator 4, alle vier Maschinen 1, 2, 3, 4 angeordnet auf einem gemeinsamen Wellenstrang 6. Es kommt nicht wesentlich darauf an, ob dieser Wellenstrang 6 ein einziges durchgehendes Bauteil ist oder aus mehreren zusammengekuppelten Bauteilen besteht. Zwischen jeweils zwei Maschinen 1 und 2, 2 und 3 bzw. 3 und 4 befindet sich jeweils ein einziges Lager 12, 13, 14; auch zwischen jedem Ende des Wellenstrangs 6 und der entsprechenden Maschine 1 oder 4 ist ein Lager 11 oder 15 vorgesehen. Jedes Lager ist versehen mit Meßeinrichtungen 8, 9, insbesondere jeweils einer Wellenmarke 8 und einem Sensor 9. Mit diesen fünf ertüchtigten Lagergehäusen 11 bis 15 ist es möglich, für jede Maschine 1, 2, 3, 4 die zwischen sich und dem Wellenstrang 6 ausgetauschte Leistung zu ermitteln und somit eine Aussage zu treffen, wie die Zufuhr mechanischer Energie zu dem Wellenstrang 6 sowie die Abfuhr mechanischer Energie aus dem Wellenstrang 6 über den Maschinensatz 1, 2, 3, 4 verteilt sind. Auf diese Weise kann sichergestellt werden, daß jede der Maschinen 1, 2, 3, 4 in einer für sie jeweils günstigen Weise betrieben wird, und es können möglicherweise auftretende kritische Betriebszustände zuverlässig erkannt werden.

## Patentansprüche

1. Verfahren zur Bestimmung einer Leistung, mit welcher mechanische Energie zwischen einer Maschine (1) von zumindest zwei feststehenden Maschinen (1,2,3,4) und einem diese entlang einer gerichteten Achse (5) durchquerenden, mit einer Winkelgeschwindigkeit um die Achse (5) rotierenden Wellenstrang (6) ausgetauscht wird, wobei die Energie in dem Wellenstrang (6) in Richtung der Achse (5) strömt, bei dem ein Winkel (7) bestimmt wird, um den der Wellenstrang (6) in der einen Maschine (1) tordiert ist, und aus dem Produkt des Winkels(7) und eines vorgegebenen Eichkoeffizienten die Leistung ermittelt wird.

2. Verfahren nach Anspruch 1, bei dem zu einem Bezugszeitpunkt Winkelpositionen zweier Wellenmarken(8), welche auf dem Wellenstrang (6) jeweils neben der Maschine (1,2,3,4) positioniert sind, so daß sie die Maschine (1,2,3,4) zwischen sich einschließen, bestimmt werden und der Winkel (7) als Differenz der Winkelpositionen ermittelt wird.

3. Verfahren nach Anspruch 2, welches zyklisch wiederholt wird.

4. Verfahren nach Anspruch 3, bei dem im wesentlichen kontinuierlich eine zeitliche Ableitung des Winkels (7) bestimmt und der Winkel (7) durch zeitliche Integration der Ableitung ermittelt wird.

5. Verfahren nach Anspruch 3, bei dem im wesentlichen kontinuierlich die zeitlichen Ableitungen der Winkelpositionen bestimmt und der Winkel (7) durch eine Kombination aus Differenzbildung und zeitlicher Integration der zeitlichen Ableitungen der Winkelpositionen ermittelt wird.

6. Verfahren nach Anspruch 5, bei dem die zeitliche Ableitung jeder Winkelposition bestimmt wird durch Messung einer durch die Rotation des Wellenstrangs gegebenen Umlaufzeit der entsprechenden Wellenmarke (8).

7. Verfahren nach einem der Ansprüche 3 bis 6, bei dem der Winkel (7) über eine Vielzahl von zeitlich aufeinanderfolgenden Ermittlungen gemittelt wird.

8. Verfahren nach einem der vorhergehenden Ansprüche, bei dem mehrere Maschinen (1,2,3,4) entlang des Wellenstrangs (6) angeordnet sind und für jede Maschine (1,2,3,4) und den Wellenstrang (6) die Leistung bestimmt wird.

9. Vorrichtung zur Bestimmung einer Leistung, mit welcher mechanische Energie zwischen einer Maschine (1) von zumindest zwei feststehenden Maschinen (1,2,3,4) und einem diese entlang einer gerichteten Achse (5) durchquerenden, mit einer Winkelgeschwindigkeit um die Achse (5) rotierbaren Wellenstrang (6) ausgetauscht wird, wobei die Energie in dem Wellenstrang (6) in Richtung der Achse (5) strömt, **gekennzeichnet durch** neben der einen Maschine (1) und diese einschließend positionierte Meßeinrichtungen (8,9) zur Bestimmung eines Winkels(7), um den der Wellenstrang (6) in der einen Maschine (1) tordiert ist, sowie eine mit den Meßeinrichtungen (8,9) kommunizierende Recheneinrichtung (10) zur Ermittlung der Leistung als Produkt des Winkels (7) und eines vorgegebenen Eichkoeffizienten.

10. Vorrichtung nach Anspruch 9, bei der die Meßeinrichtungen(8,9) auf dem Wellenstrang (6) angebrachte Wellenmarken (8) sowie neben dem Wellenstrang (6) ortsfest angebrachte und mit den Wellenmarken (8) kommunizierende Sensoren (9) umfassen.

11. Vorrichtung nach Anspruch 10, bei der die Recheneinrichtung (10) eingerichtet ist zur Bestimmung von Nullpositionen der Wellenmarken (8), wenn der Wellenstrang (6) rotiert, ohne daß mechanische Energie ausgetauscht wird, und zur Bestimmung der Winkelpositionen relativ zu den jeweiligen Nullpositionen, wenn der Wellenstrang (6) anschließend unter einem Austausch mechanischer Energie zwischen sich und der Maschine (1, 2, 3, 4) rotiert.

12. Vorrichtung nach Anspruch 10 oder 11, bei der die Meßeinrichtungen (8,9) jeweils in einem neben der Maschine (1,2,3,4) angeordneten Lagergehäuse (11,12,13,14,15), in dem der Wellenstrang (6) in einem Lager (16) gelagert ist, angeordnet sind.

13. Vorrichtung nach einem der Ansprüche 9 bis 12, bei der die Recheneinrichtung (10) eingerichtet ist zum Vergleich der ermittelten Leistung mit einem vorgegebenen Nennwert und zur Abgabe einer Meldung, falls die Leistung von dem Nennwert abweicht.

14. Vorrichtung nach einem der Ansprüche 9 bis 13, bei der die Maschine (1,2,3,4) eine Turbine (1,2,3), insbesondere eine Gasturbine (1) oder eine Dampfturbine (2,3), oder ein Generator (4) ist.

15. Vorrichtung nach einem der Ansprüche 9 bis 14, bei der für eine Mehrzahl von Maschinen (1,2,3,4), die entlang dem Wellenstrang (6) hintereinander angeordnet sind, Meßeinrichtungen (8,9) zur Bestimmung eines zugehörigen Winkels (7), um den der Wellenstrang (6) in der jeweiligen Maschine (1,2,3,4) tordiert ist, vorgesehen sind und die Recheneinrichtung (10) eingerichtet ist zur Bestimmung der Leistung, mit der mechanische Energie ausgetauscht wird, für jeweils jede Maschine (1,2,3,4) und den Wellenstrang (6).

16. Vorrichtung nach Anspruch 15, bei der zwischen jeweils zwei Maschinen (1, 2, 3, 4) nur eine einzige Meßeinrichtung vorgesehen ist.

## Claims

1. Method for determining a power by means of which mechanical energy is exchanged between one machine (1) of at least two stationary machines (1,2,3,4) and a shaft assembly (6) which traverses said machine along an oriented axis (5) and rotates about the axis (5) with an angular velocity, the energy in the shaft assembly (6) flowing in the direction of the axis (5), in which method an angle (7) by which the shaft assembly (6) is twisted in the one machine (1) is determined, and the power is determined from the product of the angle (7) and a prescribed calibration coefficient.

2. Method according to Claim 1, in which at a reference instant angular positions of two shaft marks (8), which are positioned on the shaft assembly (6) next to the machine (1,2,3,4) in each case, such that they enclose the machine (1,2,3,4) between them, and the angle (7) is determined as the difference between the angular positions.

3. Method according to Claim 2, which is repeated cyclically.

4. Method according to Claim 3, in which in an essentially continuous fashion a time derivative of the angle (7) is determined and the angle (7) is determined by integrating the derivative over time.

5. Method according to Claim 3, in which in an essentially continuous fashion the time derivatives of the angular positions are determined and the angle (7) is determined by a combination of subtraction and integration over time of the time derivatives of the angular positions.

6. Method according to Claim 5, in which the time derivative of each angular position is determined by measuring a rotation time, given by the rotation of the shaft assembly, of the corresponding shaft mark (8).

7. Method according to one of Claims 3 to 6, in which the angle (7) is averaged over a multiplicity of temporally successive determinations.

8. Method according to one of the preceding claims, in which a plurality of machines (1,2,3,4) are arranged along the shaft assembly (6), and the power is determined for each machine (1,2,3,4) and the shaft assembly (6).

9. Device for determining a power by means of which mechanical energy is exchanged between one machine (1) of at least two stationary machines (1,2,3,4) and a shaft assembly (6) which traverses said machine along an oriented axis (5) and rotates about the axis (5) with an angular velocity, the energy in the shaft assembly (6) flowing in the direction of the axis (5), which device is characterized by measuring devices (8, 9), positioned next to the one machine (1) and surrounding the latter, for determining an angle (7) by which the shaft assembly (6) in the one machine (1) is twisted, and by a calculating device (10), communicating with the measuring devices (8,9), for determining the power as the product of the angle (7) and a prescribed calibration coefficient.

10. Device according to Claim 9, in which the measuring devices (8, 9) comprise shaft marks (8), provided on the shaft assembly (6), as well as sensors (9) provided in a fixed fashion next to the shaft assembly (6) and communicating with the shaft marks (8).

11. Device according to Claim 10, in which the calculating device (10) is set up to determine zero positions of the shaft marks (8) when the shaft assembly (6) rotates, without mechanical energy being exchanged, and to determine the angular positions relative to the respective zero positions when the shaft assembly (6) subsequently rotates while exchanging mechanical energy between itself and the machine (1, 2, 3, 4).

12. Device according to Claim 10 or 11, in which the measuring devices (8,9) are respectively arranged in a bearing housing (11,12,13,14,15) which is arranged next to the machine (1,2,3,4) and in which the shaft assembly (6) is supported in a bearing (16).

13. Device according to one of Claims 9 to 12, in which the calculating device (10) is set up for the purpose of comparing the determined power with a prescribed nominal value, and in order to output a signal if the power deviates from the nominal value.

14. Device according to one of Claims 9 to 13, in which the machine (1,2,3,4) is a turbine (1,2,3), in particular a gas turbine (1) or a steam turbine (2,3), or a generator (4).

15. Device according to one of Claims 9 to 14, in which there are provided for a plurality of machines (1,2,3,4) which are arranged one behind the other along the shaft assembly (6) measuring devices (8,9) for determining an associated angle (7) by which the shaft assembly (6) is twisted in the respective machine (1,2,3,4), and the calculating device (10) is set up to determine the power with which mechanical energy is exchanged for each machine (1,2,3,4) and the shaft assembly (6) in each case.

16. Device according to Claim 15, in which only a single measuring device is provided between two machines (1, 2, 3, 4) in each case.

## Revendications

1. Procédé pour déterminer une puissance avec laquelle de l'énergie mécanique est échangée entre une machine (1) parmi au moins deux machines (1, 2, 3, 4) fixes et une ligne (6) d'arbres traversant cette machine le long d'un axe (5) directionnel et tournant à une vitesse angulaire autour de l'axe (5), l'énergie s'écoulant dans la ligne (6) d'arbres dans la direction de l'axe (5), procédé suivant lequel on détermine un angle (7) duquel la ligne (6) d'arbres est tordue dans la machine (1), et on obtient la puissance à partir du produit de l'angle (7) et d'un coefficient d'étalonnage prescrit.

2. Procédé suivant la revendication 1, suivant lequel on détermine à un instant de référence les positions angulaires de deux repères (8) d'arbre qui sont respectivement positionnés sur la ligne (6) d'arbres à côté de la machine (1, 2, 3, 4) de telle sorte qu'ils incluent entre eux la machine (1, 2, 3, 4), et on obtient l'angle (7) comme différence des positions angulaires.

3. Procédé suivant la revendication 2, qui est répété de façon cyclique.

4. Procédé suivant la revendication 3, suivant lequel on détermine sensiblement en continu une dérivée dans le temps de l'angle (7), et on obtient l'angle (7) par intégration dans le temps de la dérivée.

5. Procédé suivant la revendication 3, suivant lequel on détermine sensiblement en continu les dérivées dans le temps des positions angulaires, et on obtient l'angle (7) en combinant une formation de différence et une intégration dans le temps des dérivées dans le temps des positions angulaires.

6. Procédé suivant la revendication 5 suivant lequel la dérivée dans le temps de chaque position angulaire est déterminée en mesurant un temps de révolution du repère (8) d'arbre correspondant qui est donné par la rotation de la ligne d'arbres.

7. Procédé suivant l'une des revendications 3 à 6, suivant lequel on forme la valeur moyenne de l'angle (7) sur une pluralité de déterminations se succédant dans le temps.

8. Procédé suivant l'une des revendications précédentes, suivant lequel plusieurs machines (1, 2, 3, 4) sont disposées le long de la ligne (6) d'arbres, et on détermine la puissance pour chaque machine (1, 2, 3, 4) et pour la ligne (6) d'arbres.

9. Dispositif pour déterminer une puissance avec laquelle de l'énergie mécanique est échangée entre une machine (1) parmi au moins deux machines (1, 2, 3, 4) fixes et une ligne (6) d'arbres traversant cette machine le long d'un axe (5) directionnel et pouvant tourner à une vitesse angulaire autour de l'axe (5), l'énergie s'écoulant dans la ligne (6) d'arbres dans la direction de l'axe (5),
caractérisé par des équipements (8, 9) de mesure positionnés à côté de la machine (1) en l'incluant entre eux, pour déterminer un angle (7) duquel la ligne (6) d'arbres est tordue dans la machine (1), et par un équipement (10) de calcul communiquant avec les équipements (8, 9) de mesure, pour déterminer la puissance comme produit de l'angle (7) et d'un coefficient d'étalonnage prescrit.

10. Dispositif suivant la revendication 9, dans lequel les équipements (8, 9) de mesure comprennent des repères (8) d'arbre installés sur la ligne (6) d'arbres, et des capteurs (9) installés fixement sur le côté de la ligne (6) d'arbres et communiquant avec les repères (8) d'arbre.

11. Dispositif suivant la revendication 10, dans lequel l'équipement (10) de calcul est conçu pour déterminer des positions de référence des repères (8) d'arbre, lorsque la ligne (6) d'arbres tourne sans que de l'énergie mécanique soit échangée, et pour déterminer les positions angulaires par rapport aux positions de référence respectives, lorsque la ligne (6) d'arbres tourne ensuite avec en même temps un échange d'énergie mécanique entre elle et la machine (1, 2, 3, 4).

12. Dispositif suivant la revendication 10 ou 11, dans lequel les équipements (8, 9) de mesure sont respectivement disposés dans un logement (11, 12, 12, 14, 15) de palier, disposé à côté de la machine (1, 2, 3, 4) et dans lequel la ligne (6) d'arbres est montée dans un palier (16).

13. Dispositif suivant l'une des revendications 9 à 12, dans lequel l'équipement (10) de calcul est conçu pour comparer la puissance déterminée à une valeur nominale prescrite et pour délivrer une notification si la puissance s'écarte de la valeur nominale.

14. Dispositif suivant l'une des revendications 9 à 13, dans lequel la machine (1, 2, 3, 4) est une turbine (1, 2, 3), notamment une turbine (1) à gaz ou une turbine (2, 3) à vapeur, ou est un générateur (4).

15. Dispositif suivant l'une des revendications 9 à 14, dans lequel, pour une pluralité de machines (1, 2, 3, 4) qui sont disposées les unes à la suite des autres le long de la ligne (6) d'arbres, il est prévu des équipements (8, 9) de mesure pour déterminer un angle (7) associé duquel la ligne (6) d'arbres est tordue dans la machine (1, 2, 3, 4) respective, et l'équipement (10) de calcul est conçu pour déterminer la puissance avec laquelle est échangée l'énergie mécanique pour chaque machine (1, 2, 3, 4) respective et la ligne (6) d'arbres.

16. Dispositif suivant la revendication 15, dans lequel un seul équipement de mesure est chaque fois prévu entre deux machines (1, 2, 3, 4).
